Europäisches Patentamt

European Patent Office

Office européen des brevets

(19)

(11) Publication number: **0 105 977**
**B1**

(12)   **EUROPEAN PATENT SPECIFICATION**

(45) Date of publication of patent specification: **03.12.86**

(51) Int. Cl.⁴: **F 16 D 65/54**

(21) Application number: **82305171.9**

(22) Date of filing: **29.09.82**

(54) Self-adjusting brake device.

(43) Date of publication of application:
25.04.84 Bulletin 84/17

(45) Publication of the grant of the patent:
03.12.86 Bulletin 86/49

(84) Designated Contracting States:
AT DE FR IT SE

(56) References cited:
DE-A-1 475 493
DE-A-2 436 541
DE-B-1 136 164
FR-A- 905 800
FR-A-1 350 690
FR-A-1 352 262
FR-A-2 048 477
FR-A-2 051 010
FR-A-2 127 135
FR-A-2 370 899
FR-A-2 441 766
GB-A-1 062 248
US-A-1 668 730
US-A-2 888 109
US-A-3 458 017
US-A-3 762 522

(73) Proprietor: DEERE & COMPANY
1 John Deere Road
Moline Illinois 61265 (US)

(72) Inventor: Al-Deem, Hissam
Schleiermacherstrasse 5
D-6800 Mannheim 1 (DE)
Inventor: Neumayer, Fritz
Beethovenstrasse 22
D-6701 Altrip (DE)
Inventor: Schmitt, Bruno
Dieselstrasse 5
D-6840 Lampertheim (DE)

(74) Representative: Pears, David Ashley et al
REDDIE & GROSE 16 Theobalds Road
London WC1X 8PL (GB).

Courier Press, Leamington Spa, England.

## Description

The present invention relates to a self-adjusting brake device between first and second relatively movable parts of a brake and defining the clearance when the brake is released. Such devices are well known in vehicle brakes. The invention is concerned more particularly with a device of the kind set forth in the introductory part of claim 1. Such a device is known from FR 1 350 690 in which a bolt fixed in the movable part extends through a sleeve frictionally restrained in the fixed part of the brake. A helical compression spring acts between the head of the bolt and an internal shoulder within the sleeve. The sleeve has to be machined with its shoulder and additional parts are necessary to establish the frictional restraint.

On the other hand it is known from DE 1 475 493 to use a spring sleeve as a tubular member in a self-adjusting brake device which does not itself incorporate a return spring.

The object of the present invention is to provide an improved device with the return spring and which is extremely simple in construction.

The device according to the invention is defined in the characterising part of claim 1.

The compression spring preferably comprises a stack of Belleville washers.

The invention will now be described in greater detail, by way of example, with reference to the accompanying cross-sectional drawings, in which:

Figure 1 shows a disc-brake calliper incorporating a known self adjusting device, of the type described in DE 1 475 493, the calliper being shown prior to the first braking operation after the assembly of the calliper.

Figure 2 shows the known device of Fig. 1 after the disc-brake has been applied, then released.

Figure 3 shows the known device when the brake is applied.

Figure 4 shows a first embodiment of a self-adjusting device according to the invention in its released state.

Figure 5 shows the embodiment of Figure 4 in its applied state.

Figure 6 shows a second embodiment in its released state.

Figure 7 shows the embodiment of Figure 6 in its applied state.

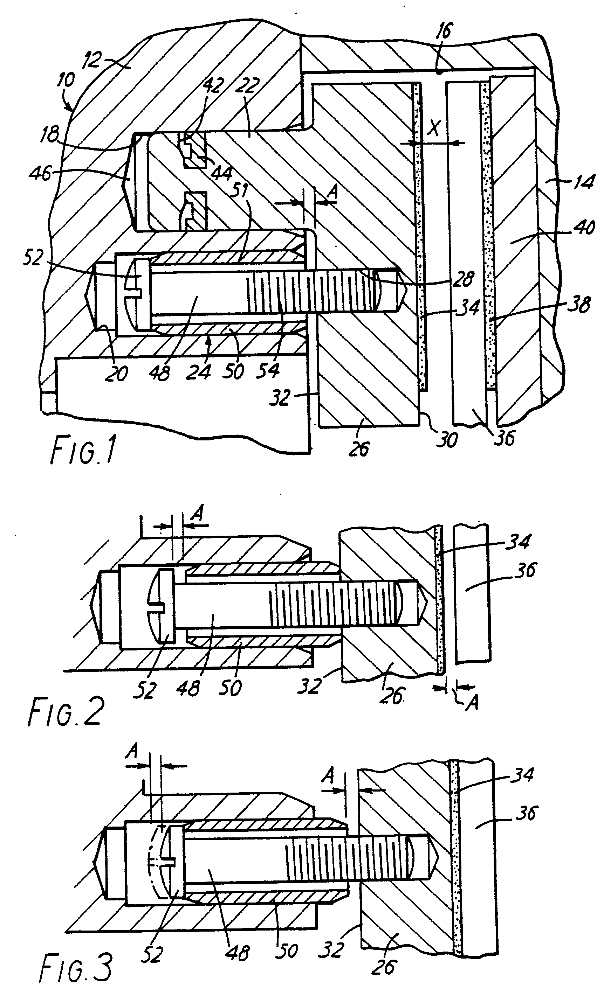

The geometry and operation of a known device will firstly be described, with reference to Figures 1 to 3.

The calliper 10 comprises a calliper bracket 12 and a calliper head 14, the two being securely joined to define a recess 16 therebetween. The calliper bracket 12 has two parallel cylindrical bores 18 and 20 which open into the recess 16, and which contain respectively a piston 22 and part of a self-adjusting device 24. The piston 22 protrudes from, and is integral with, a brake block 26. The piston 22 has an annular groove 42 in which a sealing ring 44 is housed. Leakage of hydraulic fluid from a pressure chamber 46, which is defined by the bottom of the bore 18 and the end of the piston 22 is thereby prevented.

The brake block 26 overlaps the bore 20 and has a threaded bore 28 coaxial with and open towards the bore 20 of the calliper bracket 12. The device 24 is fixed in the bore 28 which is of smaller diameter than the bore 20.

The face 30 of the brake block 26 which is opposite to the face 32 from which protrudes the piston 22 is substantially planar and is perpendicular to the axis of the piston. Attached to the face 30 is a brake lining or pad 34. Parallel to the pad 34 and separated by an oversize clearance X in Figure 1 is a rotatable brake disc 36, of which a radially outermost portion is shown in Figure 1.

A second pad 38 is adjacent to the disc 36 on the opposite side of the disc 36 to the first pad 34. The second pad 38 is fixed to a backing plate 40 attached to the head 14 by screws (not shown).

The self-adjusting device 24 comprises a coaxial screw 48 and a spring sleeve 50. The spring sleeve 50 fits tightly in the bore 20 of the calliper bracket 12, but loosely around the screw 48, an annular gap 51 existing between the shank 54 of the screw 48 and the spring sleeve 50. The shank 54 of the screw is screwed into the threaded bore 28 of the brake block 26 and the head 52 of the screw 48 is situated in the bore 20 of the calliper bracket 12. The length of the shank 54 between the head 52 of the screw and the face 32 of the brake block 26 which faces away from the disc 36, is longer than the axial length of the spring sleeve by a distance A, as shown in Figures 1 to 3.

The spring sleeve 50 is a metal tube with a longitudinal slit extending fully along its length. Such a sleeve is sometimes called a spring pin or a torsion pin. In order to be inserted into the bore 20 of the calliper bracket 12 the spring sleeve 50 must be radially compressed.

The gap A is pre-set before assembly of the brake calliper. The screw 48 is placed inside the spring sleeve 50 and is screwed into the bore 28 of the brake block. The gap A can be adjusted by altering the depth to which the screw 48 is inserted into the bore 28. The gap chosen may be set by means of a feeler gauge placed between the spring sleeve 50 and the brake block 26 or by tightening the screw 48 fully, and then unscrewing it by a suitable number of turns, the pitch of the screw thread being known.

The device operates after each braking operation to keep the distance between the brake pad 34 and the disc 36 constant and equal to A (as shown in Figure 2). It is ensured that the gap X (Figure 1) between the brake pad 34 and the disc 36 on assembly is larger than the distance A, by pushing the block 26 carrying the screw 48 and sleeve 50 fully home against the calliper bracket 12. The first operation of the brake after assembly then renders the distance which subsequently exists between the pad and the disc equal to A, by partial withdrawal of the sleeve 50 to the position thereof shown in both Figure 2 and Figure 3.

Thus, on the first operation of the brake, the piston 22 is moved outwardly in the cylinder, that is, to the right in Figure 1. The brake block 26 and its brake pad 34, and the screw 48 of the gap setting mechanism move with the piston 22. The spring sleeve 50 is similarly moved to the right, by sliding in the bore 30, the force being transmitted via the head 52 of the screw 48. It is assumed that the brake is operated hard enough to overcome the frictional restraint on the sleeve 50. The movement continues until the brake pad 34 clamps against the rotating disc 36. At this point the gap A exists between the end of the spring sleeve 50 which faces the disc 36 and the opposite face of the brake block 26, as shown in Figure 3.

When the brake pedal is released the piston 22, the brake block 26, brake pad 34 and screw 40 can only move a distance A back in the leftwards direction, because further movement is prevented by the abutment of the brake block 26 against the end of the spring sleeve 50, which does not move under the action of the relatively small return force on the block 26. Thus the situation after release of the pedal is as shown in Figure 2. A clearance A now exists between the brake pad 34 and the disc 36, and between the head 52 of the screw 48 and the spring sleeve 50.

Subsequent braking operations involve the movement of the brake block 26 and its fixtures to the right by the distance A while the spring sleeve 50 remains in the same position except that, when the pad wears down and a gap larger than A tends to arise between the pad and the disc, the spring sleeve 50 can be drawn slightly further to the right in the bore 20 in precisely the same way as it moved to the right to reduce the clearance X in Figure 1 to the clearance A of Figure 2. Thus the device 24 is automatically self-adjusting. Once set to the clearance A of Figure 1 it maintains the brake clearance in Figure 2 at this same value.

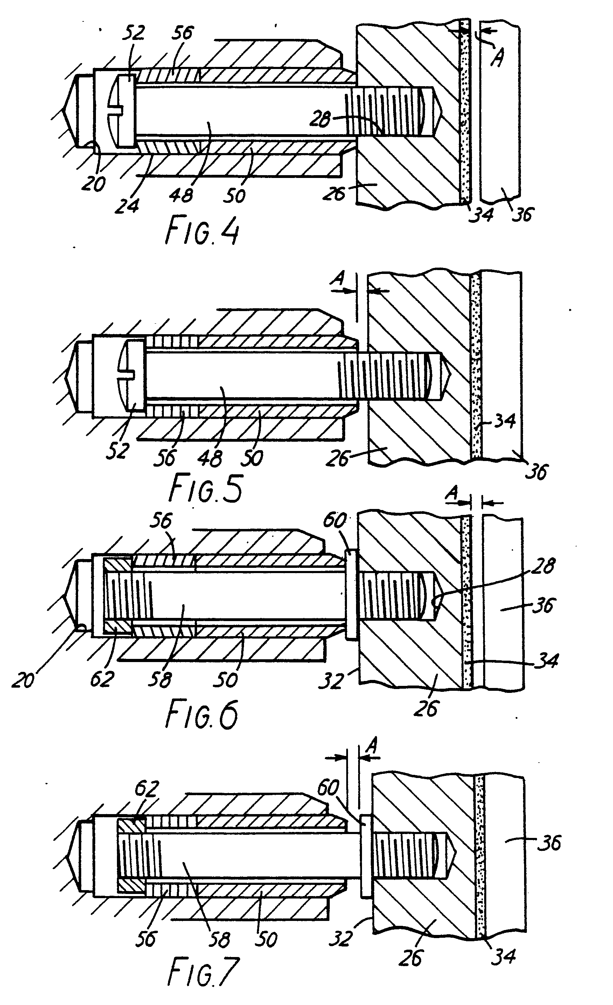

A first embodiment of the invention will now be described with reference to Figure 4 and 5 of the accompanying drawings, which show a self-adjusting device 24 with return springing, provided by Belleville washers 56, which are situated loosely around the shank of the screw 48, between the head 52 of the screw and the spring sleeve 50.

The brake calliper 10 is assembled in a similar manner to the device, previously described. The Belleville washers 56 are placed over the shank of the screw 48 followed by the spring sleeve 50. The screw 48 is then screwed into the threaded bore 28 of the brake block 26.

The gap A may be set either by tightening the screw 48 fully so that the Belleville washers are maximally compressed, i.e. compressed solid, and then unscrewing the screw by the required number of turns, or by using a feeler gauge, ensuring that the Belleville washers are maximally compressed when the gap is set. After the gap has been set the screw 48 may be locked in place, as in the first embodiment. After the gap has been set the Belleville washers relax to the state shown in Figure 4. However there is preferably still some residual compression of the washers so that they take up all slack between the screw head 52 and the spring sleeve 50, even when the brake is released.

The first operation of the brake after assembly, when the brake block 26 must move a distance X, larger than the pre-set gap size A, occurs as follows: on depression of the brake pedal the piston 22, brake block 26, pad 34 and screw 48 move towards the disc 36. Initially the spring sleeve does not move, but the Belleville washers 56 are compressed from their position of minimum compression in the installation, to that of maximum compression, whereupon a gap A is set up between the spring sleeve 50 and the brake block 26. In the latter position the Belleville washers exist as a solid sleeve of metal via which the braking force may be transmitted to the spring sleeve 50. The spring sleeve 50 is now drawn towards the right in the bore 20, that is, towards the rotating disc 36 until the pad 34 clamps against the disc 36.

When the brake pedal is released the brake block 26 and its fixtures move a distance A to the left, the movement being aided by expansion of the Belleville washers 56, until the brake block abuts the end of the spring sleeve 50. The brake block and its fixtures can move no further to the left. The situation is now as shown in Figure 4, with a clearance A between the pad 34 and the disc 36 and the length of the portion of the shank of the screw 48 which protrudes from the brake block 26 being equal to the length of the spring sleeve 50 and the Belleville washers 56 in their partially expanded state.

When the brake is applied the Belleville washers 56 are maximally compressed, whereupon a gap A is set up between the spring sleeve 50 and the brake block 26, and the clearance A between the brake block 26 and the disc 36 is closed. This situation is shown in Figure 5. Thus the difference in length between the stack of Belleville washers 56 in the applied and released states of the brake equals the clearance A which is set up between the pad 34 and the disc 36. The mechanism is self-adjusting, since the spring sleeve 50 can move to the right in the bore 20 when the clearance tends to increase from A.

In the second embodiment of Figures 6 and 7 there is provided a bolt 58 threaded at both ends, and having a flange 60 at the base of one of the threads. This thread is screwed into the bore 28 until the flange 60 abuts the face 32 of the brake block 26. The other end of the bolt 58, which is in the bore 20 of the calliper bracket 12, has a nut 62 screwed onto it. Between the nut 62 and the flange 60 is situated the stack of Belleville washers 56 and spring sleeve 50. This embodiment acts in the same way as that of Figures 4 and 5 but the clearance A is adjusted by adjusting the nut 62 on the bolt 58.

The second embodiment could employ a fixed head instead of a nut 62, the gap A then being determined by the difference in length between, on the one hand the space between the head and the flange and, on the other hand the combined length of the sleeve 50 and the stack of Belleville washers 56 when compressed solid, the said difference being established in manufacture.

In the first embodiment, the integral head 52 could be replaced by a nut 62.

Both embodiments may have helical springs instead of Belleville washers. The springs should preferably be partially compressed in the released state of the brake and must be compressed solid in the applied state of the brake.

The spring parts of the device 24, i.e. the spring sleeve 50, Belleville washers 56 or helical springs, are preferably made of spring steel.

The invention has been described in use in a particular type of disc brake. It could also be used in other types of brake.

## Claims

1. A self-adjusting brake device comprising a tubular member (50) frictionally restrained in a bore (20) in the fixed part (12) of a brake, a shank (48, or 58) passing through the tubular member and fixed to the movable part (26) of the brake, the shank having a head member (52 or 62) disposed at the end remote from the movable part of the brake, wherein the shank is coupled to the tubular member (50) with lost motion and, on operation of the brake, the shank is drawn with the movable part of the brake and wear is taken up by incremental axial withdrawal of the tubular member from the bore (20), and a compression spring (56) which biases the head member away from the tubular member when the brake is unoperated, characterised in that the tubular member is composed in part of a spring sleeve (50) known per se and in part of the compression spring (56) which is compressed solid when the brake is applied.

2. A device according to claim 1, characterised in that the compression spring (56) comprises a stack of Belleville washers.

3. A device according to claim 1 or 2, characterised in that the axial lost motion (A) is adjustable.

4. A device according to any of claims 1 to 3, characterised in that the shank is a screw (48), screwed into the movable part of the brake (26) to an extent determining the said axial lost motion (A).

5. A device according to any of claims 1 to 3, characterised in that the head portion of the shank (58) comprises a nut (62), axially adjustable on the shank to determine the axial lost motion (A).

6. A device according to any of claims 1 to 5 in a disc brake, characterised in that the device is located radially inside the periphery of the disc (36).

## Patentansprüche

1. Selbsteinstellende Bremsvorrichtung, welche ein rohrförmiges Glied (50) aufweist, das unter Reibung in einer Bohrung (20) in dem festen Teil (12) einer Bremse gehalten ist, einen Schaft (48 oder 58), der durch das rohrförmige Glied ragt und an dem beweglichen Teil (26) der Bremse befestigt ist, wobei der Schaft ein Kopfglied (52 oder 62) aufweist, das an dem Ende angeordnet ist, das von dem beweglichen Teil der Bremse abgewandt ist, bei der der Schaft mit dem rohrförmigen Glied (50) über einen Leerweg gekuppelt ist und bei Betätigung der Bremse der Schaft mit dem beweglichen Teil der Bremse gezogen wird und Abnutzung durch schrittweises axiales Zurückziehen des rohrförmigen Gliedes aus der Bohrung 20 aufgenommen wird, und bei der eine Druckfeder (56) vorgesehen ist, welche das Kopfglied von dem rohrförmigen Glied weg vorspannt, wenn die Bremse gelöst ist, dadurch gekennzeichnet, daß das rohrförmige Glied einesteils aus einer an sich bekannten Federhülse 50 und zum anderen Teil aus der Druckfeder (56) besteht, die beim Anziehen der Bremse in eine festen Zustand zusammengepreßt wird.

2. Vorrichtung nach Anspruch 1, dadurch gekennzeichnet, daß die Druckfeder (56) einen Stapel von Tellerfedern umfaßt.

3. Vorrichtung nach Anspruch 1 oder 2, dadurch gekennzeichnet, daß der axiale Leerweg (A) einstellbar ist.

4. Vorrichtung nach irgendeinem der Ansprüche 1 bis 3, dadurch gekennzeichnet, daß der Schaft eine Schraube (48) ist, welche in dem beweglichen Teil der Bremse (26) bis zu einem Ausmaß schraubbar ist, welches den besagten axialen Leerweg (A) bestimmt.

5. Vorrichtung nach irgendeinem der Ansprüche 1 bis 3, dadurch gekennzeichnet, daß der Kopfbereich des Schaftes (58) eine Mutter (62) umfaßt, welche auf dem Schaft axial einstellbar ist, um den axialen Leerweg (A) zu bestimmen.

6. Vorrichtung nach irgendeinem der Ansprüche 1 bis 5 in einer Scheibenbremse, dadurch gekennzeichnet, daß die Vorrichtung radial innerhalb des Umfanges der Scheibe (36) angeordnet ist.

## Revendications

1. Dispositif de frein à auto-réglage comprenant un élément tubulaire (50) retenu par friction dans un alésage (20) prévu dans la partie fixe (12) d'un frein, une tige (48 ou 58) qui passe dans l'élément tubulaire et qui est fixé à la partie mobile (26) du frein, la tige comportant une tête (52 ou 62) située à l'extrémité opposée à la partie mobile du frein, la tige étant accouplée à l'élément tubulaire (50) en ménageant une course à vide et, lors du fonctionnement du frein, la tige étant déplacée par traction avec la partie mobile du frein et l'usure étant compensée par un dégagement axial incrémentiel de l'élément tubulaire par rapport à l'alésage (20), et un ressort de compression (56) qui rappelle la tête de manière à l'éloigner de l'élément tubulaire lorsque le frein n'est pas actionné, caractérisé en ce que l'élément tubulaire est composé en partie d'un manchon élastique (50) connu en lui-même et en partie du ressort de compression (56) qui est comprimé à fond lorsque le frein est serré.

2. Dispositif suivant la revendication 1, caractérisé en ce que le ressort de compression (56) est constitué par un empilage de rondelles Belleville.

3. Dispositif suivant la revendication 1 ou 2, caractérisé en ce que la course à vide axiale (A) est réglable.

4. Dispositif suivant l'une quelconque des revendications 1 à 3, caractérisé en ce que la tige est une vis (48), vissée dans la partie mobile du frein (26) à un degré déterminant ladite course à vide axiale (A).

5. Dispositif suivant l'une des revendications 1 à 3, caractérisé en ce que la tête de la tige (58) est constituée par un écrou (62) réglable axialement sur la tige pour déterminer la course à vide axiale (A).

6. Dispositif suivant l'une des revendications 1 à 5, prévu dans un frein à disque, caractérisé en ce que le dispositif est situé radialement à l'intérieur de la périphérie du disque (36).

FIG.1

FIG.2

FIG.3

FIG.4

FIG.5

FIG.6

FIG.7